# FASCICULE DE BREVET EUROPEEN

(11) **EP 2 894 872 B1**
(45) Date de publication et mention de la délivrance du brevet: **06.07.2016**
(21) Numéro de dépôt: 15150165.7
(22) Date de dépôt: 06.01.2015
(51) Int. Cl.: H04Q 9/00, H04B 3/54

(54) **Procédé d'ordonnancement de tâches dans un réseau à courants porteurs en ligne**
Verfahren zur Verlaufsplanung der Aufgaben in einem PLC-Netz
Method for scheduling tasks in a power line carrier network

(30) Priorité: 10.01.2014 FR 1450184
(43) Date de publication de la demande: 15.07.2015
(73) Titulaire: SAGEMCOM ENERGY & TELECOM SAS, 92500 Rueil-Malmaison (FR)
(72) Inventeur: Teboulle, Henri, 92500 Rueil Malmaison (FR); Sergi, Jérémie, 92500 Rueil Malmaison (FR)
(74) Mandataire: Le Guen-Maillet

(56) Documents cités:
- US-A1- 2012 236 875

## Description

La présente invention concerne un ordonnancement d'exécution de tâches par des compteurs électriques d'un système d'alimentation électrique.

Dans le cadre d'un réseau d'alimentation électrique de type AMM (« Automated Meter Management » en anglais), des communications sont établies entre des compteurs électriques, dits intelligents (« smart meters » en anglais), et un dispositif concentrateur de données (« data concentrator » en anglais), parfois appelé *noeud de base* (« base node » en anglais). Les échanges entre les compteurs électriques et le dispositif concentrateur de données s'appuient sur des communications par courants porteurs en ligne (« PowerLine Communications » en anglais).

Le concentrateur de données est en charge de gérer le réseau de communication par courants porteurs en ligne (gestion de topologie, synchronisation par balises («beacon» en anglais),...) et d'ordonnancer des interventions auprès des compteurs électriques sur requêtes d'un système d'information chargé de gérer une pluralité de concentrateurs de données et de compteurs électriques pour le compte d'un opérateur du réseau d'alimentation électrique. Ces interventions sont des tâches qu'il est demandé aux compteurs électriques d'exécuter, comme par exemple pour commander à distance un organe de coupure (« breaker » en anglais) d'un compteur électrique, ou pour requérir l'envoi de données de mesures effectuées par un compteur électrique (typiquement des données de mesures de l'énergie consommée par l'installation électrique supervisée par ledit compteur électrique), ou pour modifier au moins un paramètre de configuration d'un compteur électrique, ou pour déclencher une action interne au compteur électrique.

Les tâches que ledit système d'information requiert d'exécuter doivent l'être dans un intervalle temporel fixé par ledit système d'information. Un rapport d'exécution desdites tâches est généré par le concentrateur de données au plus tard à l'expiration dudit intervalle temporel. Il est alors de la responsabilité du concentrateur de données d'ordonnancer de manière adéquate ses échanges avec les compteurs électriques, de sorte de respecter les contraintes fixées par les intervalles temporels d'exécution desdites tâches, tout en assurant la gestion du réseau de communication par courants porteurs en ligne.

Un tel système est décrit dans le document US 2012/0236875.

De telles communications par courants porteurs en ligne doivent faire face à des interférences liées à des phénomènes de diaphonie, et/ou à un manque de fiabilité de certains liens de communication dans le réseau de communication par courants porteurs en ligne (e.g. limite de portée due à la longueur des câbles), et/ou à des bruits de différentes natures (bruits blancs, bruits colorés, bruits impulsionnels principalement), et/ou à des désadaptations d'impédance. Pour rappel, la diaphonie est un phénomène qui permet aux signaux, typiquement par couplage capacitif, de se propager sans passer par des paires de cuivre proprement dites, mais par des liens parasites non visibles. Ce phénomène est instable, car pouvant varier en fonction de multiples paramètres, tel que les charges alimentées par ledit réseau d'alimentation électrique, la consommation électrique des foyers alimentés et la température environnante. A noter qu'il peut également y avoir de la diaphonie au sein d'un même appareil via des liaisons cuivre indépendantes, sur circuits imprimés et/ou via certains composants qui constituent ledit appareil.

De plus, des collisions entre messages émis par différents dispositifs du réseau de communication par courants porteurs en ligne peuvent survenir.

Tous ces phénomènes font qu'il arrive fréquemment que des tâches ne puissent pas être exécutées au moment où le concentrateur de données le souhaiterait selon la planification des tâches qu'il avait précédemment établie.

Le concentrateur de données inclut dans le rapport d'exécution le résultat d'exécution de chaque tâche par chaque compteur électrique concerné lorsque ladite tâche a pu être exécutée, et inclut, sinon, une information indiquant que ladite tâche n'a pu être exécutée par tel ou tel compteur électrique. Il est alors typiquement de la responsabilité dudit système d'information de requérir ultérieurement à nouveau que soient exécutées les tâches qui n'ont pas pu l'être. Cela génère des échanges supplémentaires entre chaque concentrateur de données concerné et ledit système d'information, ce qui n'est pas efficace en termes d'utilisation de ressources. De plus, ces échanges sont tributaires de la qualité du canal de communication entre ledit concentrateur de données concerné et ledit système d'information, ce qui peut accentuer l'inefficacité en termes d'utilisation de ressources (retransmissions,...) et peut accroître la latence d'exécution des mécanismes de type AMM.

On peut noter qu'il est connu dans les systèmes de communication qu'un premier dispositif (tel que le concentrateur de données) s'autorise à effectuer jusqu'à un nombre maximum prédéfini de tentatives successives pour communiquer avec un second dispositif (tel qu'un compteur électrique), avant de renoncer à l'exécution de la tâche concernée et de passer à l'exécution d'une autre tâche. Cependant, une telle mise en oeuvre de tentatives successives entraîne un retard dans l'exécution d'autres tâches par d'autres compteurs électriques respectifs. Il est en effet fréquent que, lorsqu'un dispositif ne peut établir une communication une première fois, les conditions environnementales qui n'ont pas permis d'établir cette communication soient inchangées pour les tentatives suivantes et qu'ainsi le nombre maximal de tentatives successives soit atteint sans avoir pu établir ladite communication. Il est d'ailleurs fréquent que le dispositif avec lequel la communication n'a pu être établie ait à se réenregistrer dans le réseau de communication par courants porteurs en ligne, ce qui nécessite un laps de temps important avant de recouvrer une certaine stabilité de topologie.

Il est souhaitable de pallier ces inconvénients de l'état de la technique.

Il est notamment souhaitable de fournir une solution qui permette d'améliorer le taux d'obtention de résultats des tâches demandées par ledit système d'information aux compteurs électriques via un ou plusieurs dispositifs concentrateurs. Il est aussi souhaitable de fournir une solution qui permette d'optimiser l'utilisation des ressources dans un tel réseau d'alimentation électrique de type AMM.

L'invention concerne un procédé d'ordonnancement d'exécution de tâches par des compteurs électriques d'un système d'alimentation électrique, les compteurs électriques étant rattachés à un dispositif concentrateur via un réseau à courants porteurs en ligne, le dispositif concentrateur recevant des requêtes d'intervention en provenance d'un système d'information d'un opérateur du système d'alimentation électrique, chaque requête d'intervention décrivant au moins une tâche à réaliser par au moins un compteur électrique dans un intervalle de temps précisé par ladite requête d'intervention. Le dispositif concentrateur tente de faire exécuter en priorité par des compteurs électriques des tâches qui n'ont pas encore été tentées d'être exécutées par lesdits compteurs électriques, lorsque l'intervalle temporel relatif à chacune desdites tâches a débuté mais n'est pas encore écoulé. Le dispositif concentrateur place en file d'attente de récupération des exécutions de tâches respectives qui ont été requises par le dispositif concentrateur auprès de compteurs électriques respectifs, mais pour lesquelles le dispositif concentrateur n'a pas reçu de résultat d'exécution de la part desdits compteurs électriques. Et, le dispositif concentrateur tente de faire exécuter par des compteurs électriques des tâches placées en file d'attente de récupération, lorsque l'intervalle temporel relatif à chacune desdites tâches a débuté mais n'est pas encore écoulé et qu'il ne reste aucune tâche qui n'ait pas encore été tentée d'être exécutée alors que l'intervalle temporel relatif à ladite tâche a débuté mais n'est pas encore écoulé. Ainsi, en utilisant du temps libre après avoir tenté une première fois de faire exécuter chaque tâche par le(s) compteur(s) électrique(s) concerné(s), le dispositif concentrateur peut tenter de refaire des tentatives pour des tâches que les compteurs électriques n'ont pas pu exécuter lors de la première tentative.

Selon un mode de réalisation particulier, au moins une tâche à exécuter par au moins un compteur électrique est décomposée en sous-tâches, et le dispositif concentrateur assure que l'exécution desdites sous-tâches est ordonnancée selon un ordre de passage, explicitement ou implicitement, indiqué dans la requête d'intervention dans laquelle sont décrites lesdites sous-tâches.

Selon un mode de réalisation particulier, chaque tâche à faire exécuter par un compteur électrique est : une mise à jour d'au moins un paramètre dudit compteur électrique ; ou une collecte de données de mesures réalisées par ledit compteur électrique sur une plage temporelle donnée ; ou une action interne à réaliser par ledit compteur électrique.

Selon un mode de réalisation particulier, lorsque plusieurs exécutions de tâches respectives ont été placées en file d'attente de récupération, le dispositif concentrateur effectue un tri desdites exécutions en file d'attente de récupération selon au moins un critère prédéfini.

Selon un mode de réalisation particulier, le dispositif concentrateur garde une trace, pour chacun des compteurs électriques qui lui sont rattachés, du dernier instant auquel le dispositif concentrateur a eu une communication sans erreur avec ledit compteur électrique, et le dispositif concentrateur effectue ledit tri en tenant compte du dernier instant auquel le dispositif concentrateur a eu une communication sans erreur avec chaque compteur électrique concerné par une exécution de tâche mise en file d'attente.

Selon un mode de réalisation particulier, le dispositif concentrateur obtient une information de niveau hiérarchique dans un arbre formé par le réseau à courants porteurs en ligne et dont le dispositif concentrateur est la racine, de chaque compteur électrique rattaché au dispositif concentrateur, et le dispositif concentrateur effectue ledit tri en tenant compte de l'information de niveau hiérarchique de chaque compteur électrique concerné par une exécution de tâche mise en file d'attente.

Selon un mode de réalisation particulier, le dispositif concentrateur prend en outre en compte une distance, dans l'arbre formé par le réseau à courants porteurs en ligne, entre compteurs électriques auxquels des tâches respectives sont successivement demandées à être exécutées.

Selon un mode de réalisation particulier, le dispositif concentrateur obtient une information représentative d'un instant de dernier enregistrement, dans le réseau à courants porteurs en ligne, de chaque compteur électrique rattaché au dispositif concentrateur, et le dispositif concentrateur effectue ledit tri en tenant compte dudit instant de dernier enregistrement de chaque compteur électrique concerné par une exécution de tâche mise en file d'attente.

Selon un mode de réalisation particulier, pour effectuer ledit tri, le dispositif concentrateur applique une hiérarchie de critères.

Selon un mode de réalisation particulier, le dispositif concentrateur stocke en mémoire une trace indiquant, pour chaque tâche dont l'exécution a été requise auprès d'au moins un compteur électrique, si ladite tâche a été correctement exécutée par chaque compteur électrique concerné, et le dispositif concentrateur effectue ledit tri en tenant compte des traces stockées pour au moins une requête d'intervention précédente concernant la même tâche et le(s) même(s) compteur(s) électrique(s).

Selon un mode de réalisation particulier, le dispositif concentrateur sélectionne la hiérarchie de critères parmi une pluralité de hiérarchies prédéfinies de critères, en fonction de statistiques de stabilité du réseau à courants porteurs en ligne et/ou en fonction d'un calendrier prédéfini.

Selon un mode de réalisation particulier, le dispositif concentrateur assure que deux requêtes successives adressées un même compteur électrique soient séparées par un écart temporel supérieur ou égal à un seuil prédéfini.

Selon un mode de réalisation particulier, le réseau à courants porteurs en ligne est conforme aux spécifications PRIME ou aux spécifications G3-PLC.

L'invention concerne également un dispositif concentrateur adapté pour ordonnancer des exécutions de tâches par des compteurs électriques d'un système d'alimentation électrique, les compteurs électriques étant destinés à être rattachés au dispositif concentrateur via un réseau à courants porteurs en ligne, le dispositif concentrateur étant adapté pour recevoir des requêtes d'intervention en provenance d'un système d'information d'un opérateur du système d'alimentation électrique, chaque requête d'intervention décrivant au moins une tâche à réaliser par au moins un compteur électrique dans un intervalle de temps précisé par ladite requête d'intervention. Le dispositif concentrateur est adapté pour tenter de faire exécuter en priorité par des compteurs électriques des tâches qui n'ont pas encore été tentées d'être exécutées par lesdits compteurs électriques, lorsque l'intervalle temporel relatif à chacune desdites tâches a débuté mais n'est pas encore écoulé. Le dispositif concentrateur est adapté pour placer en file d'attente de récupération des exécutions de tâches respectives qui ont été requises par le dispositif concentrateur auprès de compteurs électriques respectifs, mais pour lesquelles le dispositif concentrateur n'a pas reçu de résultat d'exécution de la part desdits compteurs électriques. Et, le dispositif concentrateur est adapté pour tenter de faire exécuter par des compteurs électriques des tâches placées en file d'attente de récupération, lorsque l'intervalle temporel relatif à chacune desdites tâches a débuté mais n'est pas encore écoulé et qu'il ne reste aucune tâche qui n'ait pas encore été tentée d'être exécutée alors que l'intervalle temporel relatif à ladite tâche a débuté mais n'est pas encore écoulé.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus, lorsque ledit programme est exécuté par le processeur. L'invention concerne également des moyens de stockage comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un système de communication déployé sur un réseau d'alimentation électrique et dans lequel l'invention peut être mise en oeuvre;
- la Fig. 2 illustre schématiquement un exemple d'architecture matérielle d'un dispositif concentrateur du système de communication ;
- la Fig. 3 illustre schématiquement un algorithme, mis en oeuvre par le dispositif concentrateur, de traitement de requêtes d'intervention auprès d'au moins un compteur électrique du système de communication ;
- la Fig. 4 illustre schématiquement un algorithme, mis en oeuvre par le dispositif concentrateur, de génération de rapports d'exécution relatifs aux requêtes d'intervention ;
- la Fig. 5 illustre schématiquement un algorithme, mis en oeuvre par le dispositif concentrateur, d'ordonnancement de tâches à faire exécuter par le(s) compteur(s) électrique(s) au(x)quel(s) la ou les requête(s) d'intervention se référe(nt) ; et
- la Fig. 6 illustre schématiquement un exemple d'échanges de messages au sein du système de communication, dans le cadre d'un traitement de telles requêtes d'intervention.

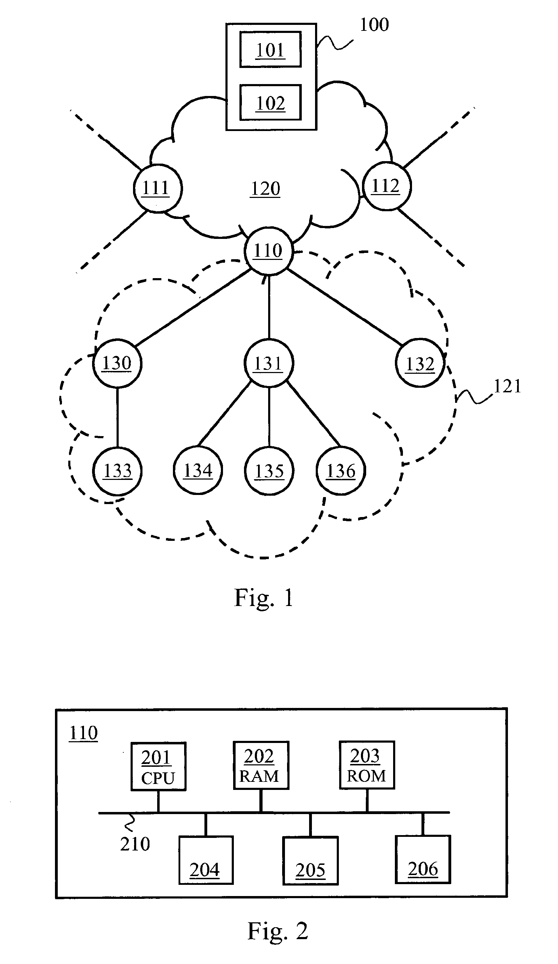

La Fig. 1 illustre schématiquement un système de communication déployé sur un réseau d'alimentation électrique et dans lequel l'invention peut être mise en oeuvre.

Le système de communication comporte un système d'information 100, au moins un dispositif concentrateur, et une pluralité de compteurs électriques 130, 131, 132, 133, 134, 135, 136.

Le rôle du système d'information 100 est de collecter des données de mesures des compteurs électriques du réseau d'alimentation électrique et de paramétrer l'ensemble des compteurs électriques, notamment vis-à-vis des souscriptions des utilisateurs d'installations électriques supervisées par lesdits compteurs électriques. Le système d'information 100 comporte un module MDM (« Meter Data Management » en anglais) 101 notamment en charge d'assurer le paramétrage approprié des compteurs électriques, ainsi que de stocker et de traiter les données de mesures des compteurs électriques. Le système d'information 100 comporte en outre un module d'interface 102 en charge d'assurer les échanges avec les dispositifs concentrateurs.

Le système d'information 100 est chargé de gérer une pluralité de dispositifs concentrateurs pour le compte d'un opérateur du réseau d'alimentation électrique. Trois dispositifs concentrateurs 110, 111, 112 sont représentés à titre illustratif sur la Fig. 1. Les dispositifs concentrateurs 110, 111, 112 sont interconnectés avec le système d'information 100 via un réseau de communication 120. Le réseau de communication 120 est par exemple de type GPRS (« General Packet Radio Service » en anglais).

Les échanges entre les dispositifs concentrateurs et les compteurs électriques qui leur sont rattachés sont opérés via un réseau à courants porteurs en ligne (« PowerLine communications network » en anglais) 121. Selon un premier exemple, ces échanges sont opérés selon les spécifications PRIME (« PoweRline Intelligent Metering Evolution » en anglais). Selon un second exemple, ces échanges sont opérés selon les spécifications G3-PLC, tel que définies dans le document ITU (International Télécommunications Union) "*G.9955 Annex A - G3-PLC PHY Spécification for CENELEC A Band".*

Le réseau à courants porteurs en ligne 121 définit donc des rattachements de compteurs électriques au dispositif concentrateur 110. Le réseau à courants porteurs en ligne 121 est ainsi préférentiellement un réseau hiérarchique sous forme d'arbre, dans lequel le dispositif concentrateur 110 est la racine. Des compteurs électriques sont alors configurés comme relais entre un ou plusieurs autres compteurs électriques et le dispositif concentrateur 110, afin d'augmenter la portée dudit réseau. C'est par exemple le cas des compteurs électriques 130 et 131 sur la Fig. 1. Dans un réseau de type PRIME, un compteur électrique ayant une telle fonction de relais est appelé *noeud commutateur* (« switch node » en anglais) et remplit une fonction de commutation de paquets ou de messages. Dans un réseau de type G3-PLC, un compteur électrique ayant une telle fonction de relais est appelé *LBA* (« LowPAN Bootstrapping Agent » en anglais) et remplit une fonction de routage de paquets ou de messages. Dans un réseau de type PRIME, un compteur électrique n'ayant cette fonction de relais est appelé *noeud terminal* (« terminal node » en anglais), et dans un réseau de type G3-PLC, un compteur électrique n'ayant cette fonction de relais est appelé *LBD* (« LowPAN Bootstrapping Device » en anglais). On peut noter que dans un réseau de type G3-PLC, le dispositif concentrateur est aussi appelé *LBS* (« LowPAN Bootstrapping Server » en anglais). Il est aussi à noter que, dans ce type de réseaux à courants porteurs en ligne, certains signaux n'ont pas d'autre choix que d'emprunter des chemins de diaphonie pour atteindre leur destination.

Le système d'information 100 est alors en mesure, via le réseau de communication 120, de transmettre à chaque dispositif concentrateur des requêtes d'intervention auprès de compteurs électriques et de recevoir de chaque dispositif concentrateur des rapports d'exécution relatifs à la réalisation d'interventions préalablement requises par ledit système d'information 100. Ces interventions sont des tâches qu'il est demandé aux compteurs électriques d'exécuter. Chaque tâche peut être décomposée en sous-tâches à ordonnancer dans un ordre de passage, explicitement ou implicitement, indiqué dans ladite requête d'intervention. Le dispositif concentrateur concerné doit respecter cet ordre relatif des sous-tâches lorsque ledit dispositif concentrateur intervient auprès chaque compteur électrique concerné.

Chaque intervention auprès d'un compteur électrique est par exemple :
- une mise à jour d'au moins un paramètre dudit compteur électrique, par exemple suite à une modification de souscription auprès d'un opérateur gestionnaire du réseau d'alimentation électrique, ou pour prendre en compte un changement d'heure saisonnier ; ou
- une collecte de données de mesures réalisées par ledit compteur électrique sur une plage temporelle donnée ; ou
- une action interne à réaliser par ledit compteur électrique, comme par exemple une commande d'organe de coupure (« breaker » en anglais) du compteur électrique.

D'autres types d'intervention peuvent être définis, le principe général étant que la requête d'intervention fasse référence à au moins une action à mener par un ou plusieurs compteurs électriques. La requête d'intervention est alors décomposée en requêtes élémentaires par le dispositif concentrateur concerné, chaque requête élémentaire requérant à un unique compteur électrique de mener une unique action ou un unique groupe d'actions indissociables. Chaque compteur électrique ayant reçu une telle requête élémentaire doit exécuter la tâche, *i.e.* mener l'action ou le groupe d'actions indissociables, identifiée dans ladite requête élémentaire et transmettre en retour un rapport élémentaire d'exécution audit dispositif concentrateur. Ce rapport est dit *élémentaire* comparativement au rapport d'exécution établi par les dispositifs concentrateurs qui typiquement regroupe le résultat de plusieurs actions que devaient mener un ou plusieurs compteur électriques, même si un rapport d'exécution établi par un dispositif concentrateur peut aussi fournir le résultat d'une unique tâche exécutée par un unique compteur électrique (selon ce qui a été préalablement requis par ledit système d'information 100). Chaque rapport élémentaire d'exécution contient alors le résultat d'exécution de la tâche concernée par le compteur électrique ayant transmis ledit rapport élémentaire d'exécution.

Chaque tâche qui doit être exécutée conformément à une requête d'intervention est associée avec un intervalle temporel. Ladite requête d'intervention inclut une information représentative de l'intervalle temporel associé à chaque tâche décrite dans ladite requête d'intervention, *e.g.* instant de début d'intervalle et durée. Cet intervalle temporel définit donc un premier instant avant lequel le dispositif concentrateur concerné ne doit pas tenter de contacter le(s) compteur(s) électrique(s) concerné(s) pour l'exécution de ladite tâche et à partir duquel le dispositif concentrateur concerné doit tenter de contacter le(s) compteur(s) électrique(s) concerné(s) pour l'exécution de ladite tâche. Cet intervalle temporel définit donc aussi un second instant, ultérieur audit premier instant, auquel le dispositif concentrateur concerné doit au plus tard émettre ledit rapport d'exécution et au-delà duquel le dispositif concentrateur concerné ne doit plus tenter de contacter le(s) compteur(s) électrique(s) concerné(s) pour l'exécution de ladite tâche.

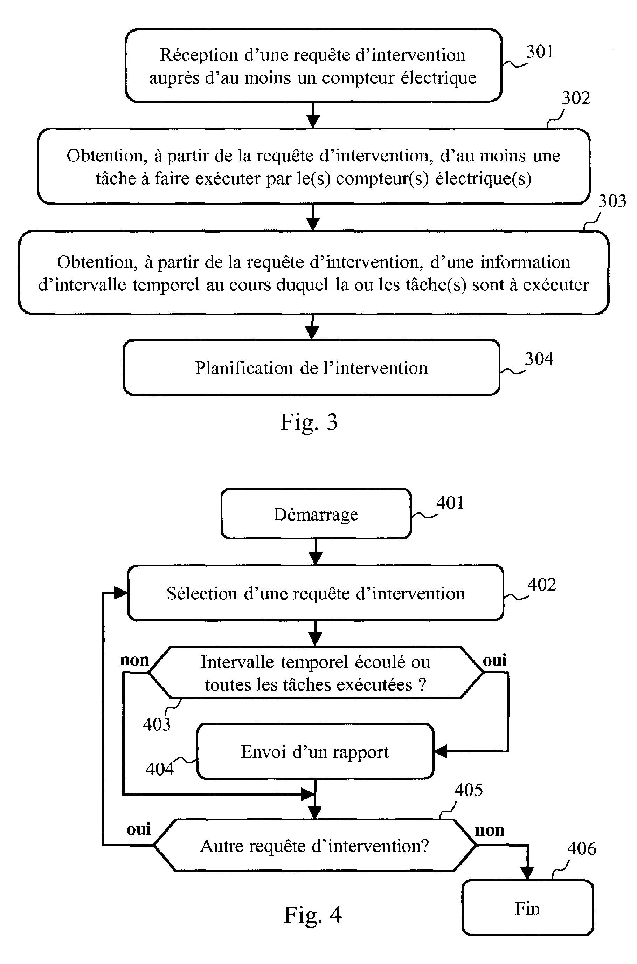

Les Figs. 3 à 5 décrites ci-après illustrent schématiquement un comportement de dispositif concentrateur pour ordonnancer des interventions auprès des compteurs électriques afin de faire exécuter des tâches par lesdits compteurs électriques, sous contrainte des intervalles temporels définis par ledit système d'information 100 pour exécuter lesdites tâches.

La Fig. 2 illustre schématiquement un exemple d'architecture matérielle d'un dispositif concentrateur du système de communication de la Fig. 1, tel que le dispositif concentrateur 110.

Considérons que la Fig. 2 représente schématiquement l'architecture du dispositif concentrateur 110. Le dispositif concentrateur 110 comprend alors, reliés par un bus de communication 210 : un processeur ou CPU («Central Processing Unit » en anglais) 201 ; une mémoire vive RAM (« Random Access Memory » en anglais) 202 ; une mémoire morte ROM (« Read Only Memory » en anglais) 203 ; une unité de stockage ou un lecteur de support de stockage, tel qu'un lecteur de cartes SD (« Secure Digital » en anglais) 204 ; une première interface 205 permettant au dispositif concentrateur 110 de communiquer avec le système d'information 100 via le réseau de communication 120 ; et une seconde interface 206 permettant au dispositif concentrateur 110 de communiquer avec des compteurs électriques via le réseau à courants porteurs en ligne 121.

Le processeur 201 est capable d'exécuter des instructions chargées dans la RAM 202 à partir de la ROM 203, d'une mémoire externe (non représentée), d'un support de stockage (tel qu'une carte SD), ou d'un réseau de communication. Lorsque le dispositif concentrateur 110 est mis sous tension, le processeur 201 est capable de lire de la RAM 202 des instructions et de les exécuter. Ces instructions forment un programme d'ordinateur causant la mise en oeuvre, par le processeur 201, de tout ou partie des algorithmes et étapes décrits ci-après.

Tout ou partie des algorithmes et étapes décrits ci-après peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais).

La Fig. 3 illustre schématiquement un algorithme, mis en oeuvre par le dispositif concentrateur 110, de traitement de requêtes d'intervention auprès d'au moins un compteur électrique.

Dans une étape 301, le dispositif concentrateur 110 reçoit en provenance du système d'information 100 une requête d'intervention auprès d'au moins un compteur électrique rattaché au dispositif concentrateur 110.

Dans une étape 302 suivante, le dispositif concentrateur 110 obtient, à partir de la requête d'intervention reçue, une information représentative d'au moins une tâche à faire exécuter par le(s) compteur(s) électrique(s) concerné(s). Comme déjà mentionné, chaque tâche peut être décomposée en sous-tâches dont l'ordonnancement relatif doit être respecté par le dispositif concentrateur 110.

Dans une étape 303 suivante, le dispositif concentrateur 110 obtient, à partir de la requête d'intervention reçue, une information représentative d'un intervalle temporel pendant lequel chaque tâche concernée par ladite requête d'intervention doit être exécutée et à la fin duquel un rapport d'exécution doit être émis par le dispositif concentrateur 110 à destination du système d'information 100. Cet intervalle temporel définit un premier instant avant lequel le dispositif concentrateur 110 ne doit pas tenter de contacter le(s) compteur(s) électrique(s) concerné(s) pour l'exécution de ladite tâche et à partir duquel le dispositif concentrateur 110 doit tenter de contacter le(s) compteur(s) électrique(s) concerné(s) pour l'exécution de ladite tâche. Cet intervalle temporel définit un second instant, ultérieur audit premier instant, auquel le dispositif concentrateur 110 doit au plus tard émettre ledit rapport d'exécution et au-delà duquel le dispositif concentrateur 110 ne doit plus tenter de contacter le(s) compteur(s) électrique(s) concerné(s) pour l'exécution de ladite tâche. La fourniture des rapports d'exécution est décrite ci-après en relation avec la Fig. 4.

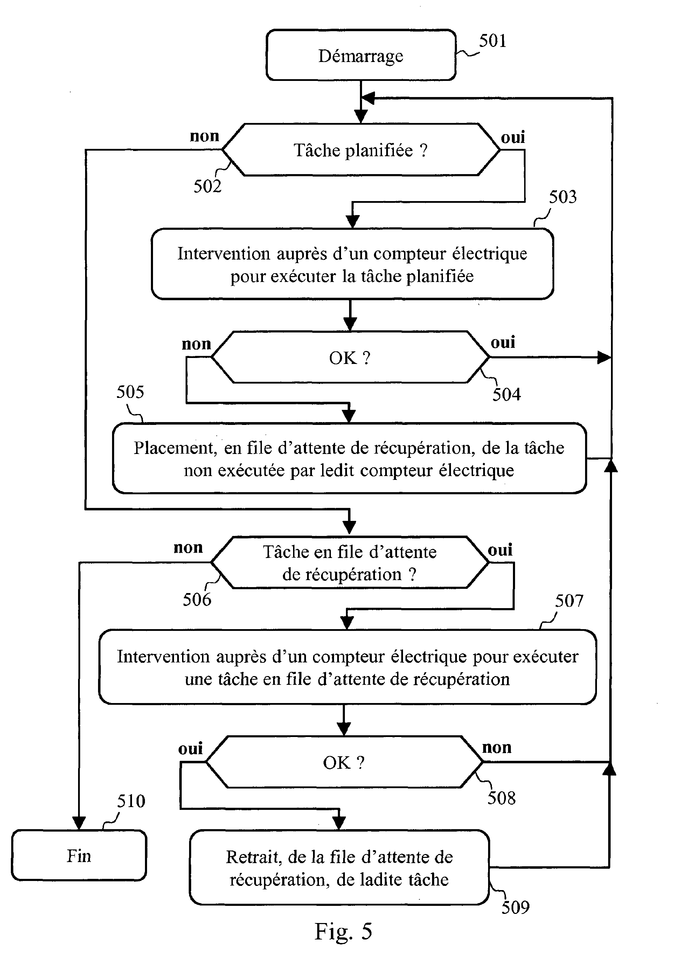

Dans une étape 304 suivante, le dispositif concentrateur 110 planifie l'exécution de chaque tâche indiquée dans la requête d'intervention reçue. En d'autres termes, le dispositif concentrateur 110 informe un mécanisme d'ordonnancement, en charge d'ordonnancer des échanges à effectuer avec les compteurs électriques qui sont rattachés au dispositif concentrateur 110, de chaque tâche à effectuer, compteur électrique par compteur électrique. Le dispositif concentrateur 110 informe aussi le mécanisme d'ordonnancement de l'intervalle temporel pendant lequel ladite tâche doit être exécutée. Le comportement de ce mécanisme d'ordonnancement est décrit ci-après en relation avec la Fig. 5.

La Fig. 4 illustre schématiquement un algorithme, mis en oeuvre par le dispositif concentrateur 110, de génération de rapports d'exécution relatifs aux requêtes d'intervention reçues en provenance du système d'information 100.

Dans une étape 401, le dispositif concentrateur 110 démarre l'algorithme de génération de rapports d'exécution. Par exemple, l'exécution de cet algorithme est déclenchée sur un événement d'une horloge interne du dispositif concentrateur 110.

Dans une étape 402 suivante, le dispositif concentrateur 110 sélectionne une requête d'intervention préalablement reçue en provenance du système d'information 100 et pour laquelle aucun rapport d'exécution n'a encore été établi par le dispositif concentrateur 110.

Dans une étape 403 suivante, le dispositif concentrateur 110 détermine si l'intervalle temporel associé à la requête d'intervention sélectionnée est écoulé. Si tel est le cas, une étape 404 est effectuée; sinon, le dispositif concentrateur 110 détermine si chaque tâche identifiée dans ladite requête d'intervention a été exécutée par chaque compteur électrique concerné. Si tel est le cas, l'étape 404 est effectuée ; sinon, une étape 405 est effectuée.

Dans l'étape 404, le dispositif concentrateur 110 génère un rapport d'exécution de la requête d'intervention sélectionnée. Le rapport d'exécution est généré en l'état, c'est-à-dire que le rapport d'exécution contient le résultat de chaque tâche effectivement exécutée par chaque compteur électrique concerné. Lorsqu'une tâche n'a pas pu être exécutée par un compteur électrique, le rapport d'exécution indique ce fait et retire l'exécution de ladite tâche par ledit compteur électrique d'une file d'attente de récupération (« recovery queue » en anglais) dans laquelle des interventions à retenter sont placées, tel que décrit ci-après en relation avec la Fig. 5. Ensuite, l'étape 405 est effectuée.

Dans l'étape 405, le dispositif concentrateur 110 vérifie s'il existe au moins une autre requête d'intervention préalablement reçue en provenance du système d'information 100 et pour laquelle aucun rapport d'exécution n'a encore été établi par le dispositif concentrateur 110. Si tel est le cas, l'étape 402 est réitérée en sélectionnant une dite autre requête d'intervention ; sinon, il est mis fin à l'algorithme dans une étape 406.

La Fig. 5 illustre schématiquement un algorithme, mis en oeuvre par le dispositif concentrateur 110, d'ordonnancement de tâches. Le principe détaillé par l'algorithme de la Fig. 5 est que caractérisé en ce que le dispositif concentrateur 110 tente de faire exécuter en priorité des tâches qui n'ont pas encore été tentées d'être exécutées, lorsque l'intervalle temporel relatif à chacune desdites tâches a débuté mais n'est pas encore écoulé. Lorsque la tentative de faire exécuter une tâche échoue, le dispositif concentrateur 110 place l'exécution de ladite tâche en file d'attente de récupération. Puis, le dispositif concentrateur 110 tente de faire exécuter des tâches placées en file d'attente de récupération, lorsque l'intervalle temporel relatif à chacune desdites tâches a débuté mais n'est pas encore écoulé et qu'il ne reste aucune tâche qui n'ait pas encore été tentée d'être exécutée alors que l'intervalle temporel relatif à ladite tâche a débuté mais n'est pas encore écoulé.

Dans une étape 501, le dispositif concentrateur 110 démarre l'algorithme d'ordonnancement de tâches.

Dans une étape 502 suivante, le dispositif concentrateur 110 vérifie si une tâche préalablement planifiée doit être réalisée, ladite tâche étant associé à un intervalle temporel pour l'exécution de ladite tâche qui est tel que l'instant où est exécutée l'étape 502 est inclus dans ledit intervalle temporel. Si tel est le cas, une étape 503 est effectuée ; sinon, une étape 506 est effectuée.

Dans l'étape 503, le dispositif concentrateur 110 intervient auprès du compteur électrique concerné par ladite tâche programmée, de manière à ce que ledit compteur électrique exécute ladite tâche. En d'autres termes, le dispositif concentrateur 110 envoie un message audit compteur électrique via le réseau à courants porteurs en ligne 121, le message indiquant audit compteur électrique que la tâche doit être exécutée par ledit compteur électrique. Après exécution de la tâche, ledit compteur électrique doit transmettre au dispositif concentrateur 110 un message contenant le résultat d'exécution de la tâche. Comme déjà mentionné, des interférences et instabilités du réseau à courants porteurs en ligne 121 peuvent empêcher la propagation des messages entre le dispositif concentrateur 110 et ledit compteur électrique. Il se peut donc que ledit compteur électrique ne reçoive pas le message émis par le dispositif concentrateur 110 et il se peut aussi que le dispositif concentrateur 110 ne reçoive pas le message de réponse émis par ledit compteur électrique.

Dans une étape 504 suivante, le dispositif concentrateur 110 vérifie si ledit dispositif concentrateur 110 a reçu le résultat d'exécution de ladite tâche par ledit compteur électrique. Si tel est le cas, l'étape 502 est réitérée ; sinon, une étape 505 est effectuée.

Dans l'étape 505, le dispositif concentrateur 110 place l'exécution de ladite tâche par ledit compteur électrique dans la file d'attente de récupération. Une nouvelle tentative d'exécution de la tâche peut ainsi être ultérieurement réalisée. L'étape 502 est ensuite réitérée.

Dans l'étape 506, le dispositif concentrateur 110 vérifie si au moins une exécution de tâche est présente dans la file d'attente de récupération. Si tel est le cas, une étape 507 est effectuée ; sinon, il est mis fin à l'algorithme dans une étape 510.

Dans l'étape 507, le dispositif concentrateur 110 intervient auprès du compteur électrique concerné par l'exécution de ladite tâche en file d'attente de récupération, de manière à ce que ledit compteur électrique exécute ladite tâche. En d'autres termes, le dispositif concentrateur 110 envoie un message audit compteur électrique via le réseau à courants porteurs en ligne 121, le message indiquant audit compteur électrique que la tâche doit être exécutée par ledit compteur électrique. Après exécution de la tâche, ledit compteur électrique doit transmettre au dispositif concentrateur 110 un message contenant le résultat d'exécution de ladite tâche.

Lorsque plusieurs exécutions de tâche sont présentes en file d'attente de récupération, au moins un critère peut être appliqué pour trier lesdites tâches et ainsi définir un ordre de passage pour retenter de faire exécuter lesdites tâches par les compteurs électriques concernés. Un tel critère permet par exemple d'effectuer un tri parmi les compteurs électriques concernés par au moins une tâche dont l'exécution a été mise en file d'attente de récupération. Cela permet de définir un ordre de passage des compteurs électriques concernés, le dispositif concentrateur 110 étant alors apte à requérir, selon l'ordre de tri desdits compteurs électriques, l'exécution de l'ensemble des tâches concernant un compteur électrique avant de passer à l'exécution de l'ensemble des tâches concernant un autre compteur électrique. Bien qu'effectuant le tri sur les compteurs électriques, cette démarche revient donc à effectuer un tri parmi les tâches concernées, sous contrainte que les tâches concernant un même compteur électrique sont successivement requises.

Selon un mode de réalisation particulier, le dispositif concentrateur 110 garde une trace, pour chacun des compteurs électriques qui lui sont rattachés, du dernier instant auquel le dispositif concentrateur 110 a eu une communication sans erreur avec ledit compteur électrique. Le dispositif concentrateur 110 peut alors trier les tâches en file d'attente de récupération selon lesdits derniers instants auxquels le dispositif concentrateur 110 a eu une communication avec les compteurs électriques respectifs. Le dispositif concentrateur 110 cherche alors préférentiellement à favoriser des exécutions de tâches par des compteurs électriques avec lesquels le dispositif concentrateur 110 a établi le plus récemment des communications sans erreur.

Selon un autre mode de réalisation particulier, le dispositif concentrateur 110 obtient une information de niveau hiérarchique, dans l'arbre formé par le réseau à courants porteurs en ligne 121, de chaque compteur électrique qui est rattaché au dispositif concentrateur 110. Le dispositif concentrateur 110 peut alors trier les tâches en file d'attente de récupération selon les niveaux hiérarchiques respectifs des compteurs électriques concernés. Le dispositif concentrateur 110 cherche alors préférentiellement à favoriser des exécutions de tâches par des compteurs électriques les plus proches hiérarchiquement du dispositif concentrateur 110. Le dispositif concentrateur 110 peut en outre prendre en compte une distance, dans l'arbre formé par le réseau à courants porteurs en ligne 121, entre compteurs électriques auxquels des tâches respectives sont successivement demandées à être exécutées. Une telle distance correspond à un nombre de sauts logiques entre le dispositif concentrateur 110 et le compteur électrique concerné. Ainsi, plus cette distance est grande (ou au dessus d'un seuil prédéfini), plus les risques de collisions de messages sont réduits.

Selon encore un autre mode de réalisation particulier, le dispositif concentrateur 110 obtient une information représentative d'un instant de dernier enregistrement, dans le réseau à courants porteurs en ligne 121, de chaque compteur électrique rattaché au dispositif concentrateur 110. Le dispositif concentrateur 110 peut alors trier les tâches en file d'attente de récupération selon les instants de dernier enregistrement des compteurs électriques concernés. Lorsque le réseau à courants porteurs en ligne 121 est de type PRIME, le dispositif concentrateur 110 peut alors chercher préférentiellement à favoriser des exécutions de tâches par des compteurs électriques les plus anciennement enregistrés dans le réseau à courants porteurs en ligne 121. Lorsque le réseau à courants porteurs en ligne 121 est de type G3-PLC, le dispositif concentrateur 110 peut alors chercher préférentiellement à favoriser des exécutions de tâches par des compteurs électriques les plus récemment enregistrés dans le réseau à courants porteurs en ligne 121. En effet, les réseaux de type G3-PLC subissent typiquement plus de variations de topologie que les réseaux de type PRIME.

Selon encore un autre mode de réalisation particulier, le dispositif concentrateur 110 assure que deux requêtes successives adressées un même compteur électrique soient séparées par un écart temporel supérieur ou égal à un seuil prédéfini. On limite ainsi la saturation au niveau de compteurs électriques.

Selon encore un autre mode de réalisation particulier, le dispositif concentrateur 110 stocke en mémoire une trace indiquant, pour chaque tâche dont l'exécution a été requise auprès d'au moins un compteur électrique, si ladite tâche a été correctement exécutée par chaque compteur électrique concerné. Le dispositif concentrateur 110 peut alors trier les tâches en file d'attente de récupération en fonction des traces stockées pour au moins une requête d'intervention précédente concernant la même tâche et le(s) même(s) compteur(s) électrique(s). Le dispositif concentrateur 110 cherche alors préférentiellement à favoriser des exécutions de tâches par des compteurs électriques pour lesquels l'exécution desdites tâches s'est correctement pour au moins une requête d'intervention précédente. Le dispositif concentrateur 110 met en oeuvre un mécanisme de contrôle de volume de traces stockées, de manière à maîtriser la quantité de mémoire nécessaire au stockage desdites traces.

Une hiérarchie de critères peut aussi être définie. Par exemple, cette hiérarchie de critères peut être définie en fonction d'expérimentations de terrain et être statiquement configurée par un installateur du dispositif concentrateur 110. Des statistiques de communication peuvent aussi être établies par le dispositif concentrateur 110 au cours de la vie du réseau à courants porteurs en ligne 121 et des différentes interventions auprès des compteurs électriques rattachés au dispositif concentrateur 110. Cette hiérarchie de critères peut ainsi être sélectionnée dynamiquement parmi une pluralité de hiérarchies prédéfinies de critères, en fonction desdites statistiques. La hiérarchie de critères peut ainsi par exemple être sélectionnée en fonction de statistiques de stabilité du réseau à courants porteurs en ligne 121. Il peut ainsi être avantageux de chercher à faire des interventions auprès des compteurs électriques les plus éloignés du dispositif concentrateur 110 dans l'arbre formé par réseau à courants porteurs en ligne 121, lorsque le réseau à courants porteurs en ligne 121 montre un niveau de stabilité supérieur ou égal à un seuil prédéfini ; et il peut être au contraire avantageux de chercher à faire des interventions auprès des compteurs électriques les plus proches du dispositif concentrateur 110 dans l'arbre formé par réseau à courants porteurs en ligne 121, lorsque le réseau à courants porteurs en ligne 121 montre un niveau de stabilité inférieur audit seuil prédéfini.

Selon un mode de réalisation particulier, le dispositif concentrateur 110 peut prendre en compte un calendrier prédéfini (quotidien, hebdomadaire, mensuel, saisonnier,...) et sélectionner dynamiquement la hiérarchie de critères en fonction du calendrier prédéfini. En effet, le comportement du réseau à courants porteurs en ligne 121 peut différer d'un moment de la journée à un autre (soir versus reste de la journée), d'un moment de la semaine à un autre (week-end versus reste de la semaine) ou d'un moment de l'année à un autre (périodes touristiques,...).

Dans une étape 508 suivante, le dispositif concentrateur 110 vérifie si ledit dispositif concentrateur 110 a reçu le résultat d'exécution de ladite tâche par ledit compteur électrique. Si tel est le cas, une étape 509 est effectuée ; sinon, l'étape 502 est réitérée.

Dans l'étape 509, le dispositif concentrateur 110 retire, de la file d'attente de récupération, l'exécution de la tâche qui était à effectuer par ledit compteur électrique et pour laquelle le dispositif concentrateur a reçu le résultat d'exécution. Ensuite, l'étape 502 est réitérée.

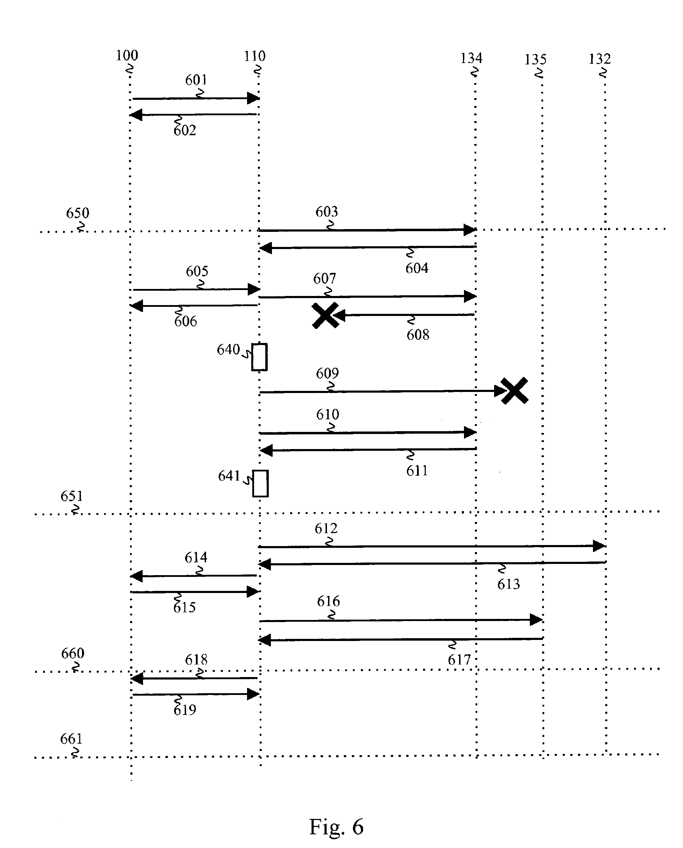

La Fig. 6 illustre schématiquement un exemple d'échanges de messages au sein du système de communication, dans le cadre d'un traitement de requêtes d'intervention. Le temps s'écoule en lisant la Fig. 6 du haut vers le bas.

Dans une étape 601, le système d'information 100 transmet au dispositif concentrateur 110 une première requête d'intervention. La première requête d'intervention représente une première tâche, décomposée en une première sous-tâche et une seconde sous-tâche, devant être exécutée par les compteurs électriques 134 et 135 (rattachés au dispositif concentrateur 110 selon la Fig. 1). Dans une étape 602 suivante, le dispositif concentrateur 110 accuse réception, auprès du système d'information 100, de la première requête d'intervention. Le dispositif concentrateur 110 détermine alors, à partir de la première requête d'intervention, dans quel intervalle temporel la première tâche doit être exécutée par les compteurs électriques 134 et 135. Cet intervalle temporel est délimité par un premier instant de début 650 et un premier instant de fin 660, tels que représentés sur la Fig. 6.

Lorsqu'arrive le premier instant de début 650, dans une étape 603, le dispositif concentrateur 110 envoie au compteur électrique 134 un message indiquant que ledit compteur électrique 134 doit exécuter la première sous-tâche. Considérons que ce message soit correctement reçu par le compteur électrique 134. Le compteur électrique 134 exécute alors la première sous-tâche et envoie au dispositif concentrateur 110, dans une étape 604, un message incluant le résultat d'exécution de la première sous-tâche. Considérons que ce message soit correctement reçu par le dispositif concentrateur 110. Le dispositif concentrateur 110 stocke le résultat reçu, afin de pouvoir inclure ledit résultat dans le futur rapport d'exécution.

Dans une étape 607 suivante, le dispositif concentrateur 110 envoie au compteur électrique 134 un message indiquant que ledit compteur électrique 134 doit exécuter la seconde sous-tâche. Considérons que ce message soit correctement reçu par le compteur électrique 134. Le compteur électrique 134 exécute alors la seconde sous-tâche et envoie au dispositif concentrateur 110, dans une étape 608, un message incluant le résultat d'exécution de la seconde sous-tâche. Considérons que ce message ne soit pas reçu par le dispositif concentrateur 110. Suite à l'expiration d'une temporisation déclenchée à l'envoi du message indiquant audit compteur électrique 134 d'exécuter la seconde sous-tâche, le dispositif concentrateur 110 considère que la connexion avec le compteur électrique 134 est interrompue. Le dispositif concentrateur 110 place alors l'exécution de la seconde sous-tâche par le compteur électrique 134 en file d'attente de récupération. Pour ce faire, le dispositif concentrateur 110 stocke une information indiquant de retenter ultérieurement de faire exécuter la seconde sous-tâche par le compteur électrique 134, sous contrainte de l'intervalle temporel défini par les instants 650 et 660.

Indépendamment des envois de messages aux compteurs électriques pour l'exécution des tâches planifiées, le dispositif concentrateur 110 peut recevoir d'autres requêtes d'intervention de la part du système d'information 100. Par exemple, le dispositif concentrateur 110 reçoit, dans une étape 605, une seconde requête d'intervention en provenance du système d'information 100. La seconde requête d'intervention représente une unique seconde tâche devant être exécutée par le compteur électrique 132 (rattaché au dispositif concentrateur 110 selon la Fig. 1). Dans une étape 606 suivante, le dispositif concentrateur 110 accuse réception, auprès du système d'information 100, de la seconde requête d'intervention. Le dispositif concentrateur 110 détermine alors, à partir de la seconde requête d'intervention, dans quel intervalle temporel la seconde tâche doit être exécutée par le compteur électrique 132. Cet intervalle temporel est délimité par un second instant de début 651 et un second instant de fin 661, tels que représentés sur la Fig. 6.

Le second instant de début 651 n'est pas atteint (ni le premier instant de fin 660) que le dispositif concentrateur 110 est notifié, dans une étape 640, que le compteur électrique 134 est à nouveau accessible. Par exemple, le compteur électrique 134 s'était retrouvé déconnecté du réseau à courants porteurs en ligne 121 et s'est ultérieurement réenregistré au sein du réseau à courants porteurs en ligne 121.

La première tâche n'a donc pas encore pu être complètement exécutée par le compteur électrique 135. Le dispositif concentrateur 110 ne va cependant pas dans l'immédiat retenter de faire exécuter la seconde sous-tâche par le compteur électrique 134, puisque d'autres tâches planifiées sont à traiter. Ainsi, dans une étape 609 suivante, le dispositif concentrateur 110 envoie au compteur électrique 135 un message indiquant que ledit compteur électrique 135 doit exécuter la première sous-tâche. Considérons que ce message ne soit pas reçu par le compteur électrique 135. Suite à l'expiration d'une temporisation déclenchée à l'envoi du message indiquant audit compteur électrique 135 d'exécuter la première sous-tâche, le dispositif concentrateur 110 considère que la connexion avec le compteur électrique 135 est interrompue. Le dispositif concentrateur 110 place alors l'exécution des première et seconde sous-tâches par le compteur électrique 135 en file d'attente de récupération. Pour ce faire, le dispositif concentrateur 110 stocke une information indiquant de retenter ultérieurement de faire exécuter la première sous-tâche et la seconde sous-tâche par le compteur électrique 135, sous contrainte de l'intervalle temporel défini par les instants 650 et 660.

Etant donné que l'instant 651 n'est pas encore atteint, il n'y a alors plus de tâches planifiées à exécuter dans l'immédiat. Le dispositif concentrateur 110 peut alors retenter de faire exécuter une tâche dont l'exécution a été mise en file d'attente de récupération. Le dispositif concentrateur 110 sélectionne alors, comme déjà décrit en relation avec la Fig. 5, une tâche parmi les tâches identifiées dans la file d'attente de récupération. Comme le dispositif concentrateur 110 a été notifié dans l'étape 640 que le compteur électrique 134 était à nouveau accessible, considérons que le dispositif concentrateur 110 décide de retenter de faire exécuter la seconde sous-tâche par le compteur électrique 134. La probabilité de pouvoir fournir un résultat supplémentaire audit système d'information 100 est plus grande, dans la mesure où le dispositif concentrateur 110 n'a reçu aucune information concernant l'accessibilité du compteur électrique 135 depuis que l'exécution de la première sous-tâche et de la seconde sous-tâche par le compteur électrique 135 a été mise en file d'attente de récupération.

Alors, dans une étape 610, le dispositif concentrateur 110 envoie au compteur électrique 134 un message indiquant que ledit compteur électrique 134 doit exécuter la seconde sous-tâche. Considérons que ce message soit correctement reçu par le compteur électrique 134. Le compteur électrique 134 exécute alors la seconde sous-tâche. Le compteur électrique 134 pourrait aussi détecter avoir déjà exécuté la seconde sous-tâche suite au message transmis par le dispositif concentrateur à l'étape 607, et décider de ne pas ré-exécuter la seconde sous-tâche. Un identifiant d'intervention peut permettre de détecter que le dispositif concentrateur 110 fait référence à une même tâche ou sous-tâche que précédemment. Le compteur électrique 134 envoie tâche au dispositif concentrateur 110, dans une étape 611, un message incluant le résultat d'exécution de la seconde sous-tâche par ledit compteur électrique 134. Considérons que ce message soit correctement reçu par le dispositif concentrateur 110. Le dispositif concentrateur 110 stocke le résultat reçu, afin de pouvoir inclure ledit résultat dans le futur rapport d'exécution.

Le premier instant de fin 660 n'est pas encore atteint que le dispositif concentrateur 110 est notifié, dans une étape 641, que le compteur électrique 135 est à nouveau accessible. Par exemple, le compteur électrique 135 s'était retrouvé déconnecté du réseau à courants porteurs en ligne 121 et s'est ultérieurement réenregistré au sein du réseau à courants porteurs en ligne 121.

Ensuite, le second instant de début 651 est atteint, ce qui signifie que l'intervalle temporel d'exécution de la seconde tâche par le compteur électrique 132 débute. Même si la première tâche n'a pas encore pu être exécutée par le compteur électrique 135, le dispositif concentrateur 110 ne va cependant pas dans l'immédiat retenter de faire exécuter la première sous-tâche par le compteur électrique 135, puisqu'une autre tâche planifiée est à traiter.

L'exécution de la seconde tâche par le compteur électrique 132 étant planifiée, le dispositif concentrateur 110 envoie au compteur électrique 132, dans une étape 612, un message indiquant que ledit compteur électrique 132 doit exécuter la seconde tâche. Considérons que ce message soit correctement reçu par le compteur électrique 132. Le compteur électrique 132 exécute alors la seconde tâche et envoie au dispositif concentrateur 110, dans une étape 613, un message incluant le résultat d'exécution de la seconde tâche. Considérons que ce message soit correctement reçu par le dispositif concentrateur 110. Le dispositif concentrateur 110 stocke le résultat reçu, afin de pouvoir inclure ledit résultat dans le futur rapport d'exécution.

Toute tâche décrite dans la seconde requête d'intervention transmise par ledit système d'information 100 à l'étape 605 ayant été exécutée par chaque compteur électrique concerné, le dispositif concentrateur 110 génère le rapport d'exécution correspondant. Ce rapport d'exécution inclut, dans le cas présent, le résultat de l'exécution de la seconde tâche par le compteur électrique 132. Dans une étape 614, le dispositif concentrateur 110 envoie alors ce rapport d'exécution audit système d'information 100. Dans une étape 615 suivante, le système d'information 100 accuse réception, auprès du dispositif concentrateur 110, dudit rapport d'exécution.

Il n'y a alors plus de tâches planifiées à exécuter. Le dispositif concentrateur 110 peut donc retenter de faire exécuter une tâche dont l'exécution a été mise en file d'attente de récupération. Alors, dans une étape 616, le dispositif concentrateur 110 envoie au compteur électrique 135 un message indiquant que ledit compteur électrique 135 doit exécuter la première sous-tâche. Considérons que ce message soit correctement reçu par le compteur électrique 135. Le compteur électrique 135 exécute alors la première sous-tâche. Le compteur électrique 135 envoie au dispositif concentrateur 110, dans une étape 617, un message incluant le résultat d'exécution de la première sous-tâche par ledit compteur électrique 135. Considérons que ce message soit correctement reçu par le dispositif concentrateur 110. Le dispositif concentrateur 110 stocke le résultat reçu, afin de pouvoir inclure ledit résultat dans le futur rapport d'exécution.

Ensuite, le premier instant de fin 660 est atteint, ce qui signifie que l'intervalle temporel d'exécution de la première tâche est écoulé. Bien que le dispositif concentrateur 110 ne soit pas parvenu à faire exécuter la seconde sous-tâche par le compteur électrique 135, le dispositif concentrateur 110 doit fournir audit système d'information 100 le rapport d'exécution relatif à la première requête d'intervention. Ce rapport d'exécution inclut, dans le cas présent : le résultat de l'exécution de la première tâche par le compteur électrique 134 ; le résultat de l'exécution de la première sous-tâche par le compteur électrique 135 ; et une indication que la seconde sous-tâche n'a pas pu être exécutée par le compteur électrique 135. Dans une étape 618, le dispositif concentrateur 110 envoie alors ce rapport d'exécution audit système d'information 100. Dans une étape 619 suivante, le système d'information 100 accuse réception, auprès du dispositif concentrateur 110, dudit rapport d'exécution.

## Revendications

1. Procédé d'ordonnancement d'exécution de tâches par des compteurs électriques (132 ; 134 ; 135) d'un système d'alimentation électrique, les compteurs électriques étant rattachés à un dispositif concentrateur (110) via un réseau à courants porteurs en ligne (121), le dispositif concentrateur recevant des requêtes d'intervention en provenance d'un système d'information (100) d'un opérateur du système d'alimentation électrique, chaque requête d'intervention décrivant au moins une tâche à réaliser par au moins un compteur électrique dans un intervalle de temps précisé par ladite requête d'intervention,
**caractérisé en ce que** le dispositif concentrateur tente (503 ; 603 ; 607 ; 609 ; 612) de faire exécuter en priorité par des compteurs électriques des tâches qui n'ont pas encore été tentées d'être exécutées par lesdits compteurs électriques, lorsque l'intervalle temporel relatif à chacune desdites tâches a débuté mais n'est pas encore écoulé ;
le dispositif concentrateur place (505) en file d'attente de récupération des exécutions de tâches respectives qui ont été requises par le dispositif concentrateur auprès de compteurs électriques respectifs, mais pour lesquelles le dispositif concentrateur n'a pas reçu de résultat d'exécution de la part desdits compteurs électriques ;
et le dispositif concentrateur tente (507 ; 610 ; 616) de faire exécuter par des compteurs électriques des tâches placées en file d'attente de récupération, lorsque l'intervalle temporel relatif à chacune desdites tâches a débuté mais n'est pas encore écoulé et qu'il ne reste aucune tâche qui n'ait pas encore été tentée d'être exécutée alors que l'intervalle temporel relatif à ladite tâche a débuté mais n'est pas encore écoulé.

2. Procédé selon la revendication 1, **caractérisé en ce qu'**au moins une tâche à exécuter par au moins un compteur électrique est décomposée en sous-tâches, et le dispositif concentrateur assure que l'exécution desdites sous-tâches est ordonnancée selon un ordre de passage, explicitement ou implicitement, indiqué dans la requête d'intervention dans laquelle sont décrites lesdites sous-tâches.

3. Procédé selon l'une quelconque des revendications 1 et 2, **caractérisé en ce que** chaque tâche à faire exécuter par un compteur électrique est :
- une mise à jour d'au moins un paramètre dudit compteur électrique ; ou
- une collecte de données de mesures réalisées par ledit compteur électrique sur une plage temporelle donnée ; ou
- une action interne à réaliser par ledit compteur électrique.

4. Procédé selon l'une quelconque des revendications 1 à 3, **caractérisé en ce que**, lorsque plusieurs exécutions de tâches respectives ont été placées en file d'attente de récupération, le dispositif concentrateur effectue un tri desdites exécutions en file d'attente de récupération selon au moins un critère prédéfini.

5. Procédé selon la revendication 4, **caractérisé en ce que** le dispositif concentrateur garde une trace, pour chacun des compteurs électriques qui lui sont rattachés, du dernier instant auquel le dispositif concentrateur a eu une communication sans erreur avec ledit compteur électrique, et le dispositif concentrateur effectue ledit tri en tenant compte du dernier instant auquel le dispositif concentrateur a eu une communication sans erreur avec chaque compteur électrique concerné par une exécution de tâche mise en file d'attente.

6. Procédé selon l'une quelconque des revendications 4 et 5, **caractérisé en ce que** le dispositif concentrateur obtient une information de niveau hiérarchique dans un arbre formé par le réseau à courants porteurs en ligne et dont le dispositif concentrateur est la racine, de chaque compteur électrique rattaché au dispositif concentrateur, et le dispositif concentrateur effectue ledit tri en tenant compte de l'information de niveau hiérarchique de chaque compteur électrique concerné par une exécution de tâche mise en file d'attente.

7. Procédé selon la revendication 6, **caractérisé en ce que** le dispositif concentrateur prend en outre en compte une distance, dans l'arbre formé par le réseau à courants porteurs en ligne, entre compteurs électriques auxquels des tâches respectives sont successivement demandées à être exécutées.

8. Procédé selon l'une quelconque des revendications 4 à 7, **caractérisé en ce que** le dispositif concentrateur obtient une information représentative d'un instant de dernier enregistrement, dans le réseau à courants porteurs en ligne, de chaque compteur électrique rattaché au dispositif concentrateur, et le dispositif concentrateur effectue ledit tri en tenant compte dudit instant de dernier enregistrement de chaque compteur électrique concerné par une exécution de tâche mise en file d'attente.

9. Procédé selon l'une quelconque des revendications 4 à 8, **caractérisé en ce que** le dispositif concentrateur stocke en mémoire une trace indiquant, pour chaque tâche dont l'exécution a été requise auprès d'au moins un compteur électrique, si ladite tâche a été correctement exécutée par chaque compteur électrique concerné, et le dispositif concentrateur effectue ledit tri en tenant compte des traces stockées pour au moins une requête d'intervention précédente concernant la même tâche et le(s) même(s) compteur(s) électrique(s).

10. Procédé selon l'une quelconque des revendications 4 à 9, **caractérisé en ce que**, pour effectuer ledit tri, le dispositif concentrateur applique une hiérarchie de critères.

11. Procédé selon la revendication 10, **caractérisé en ce que** le dispositif concentrateur sélectionne la hiérarchie de critères parmi une pluralité de hiérarchies prédéfinies de critères, en fonction de statistiques de stabilité du réseau à courants porteurs en ligne et/ou en fonction d'un calendrier prédéfini.

12. Procédé selon l'une quelconque des revendications 1 à 11, **caractérisé en ce que** le dispositif concentrateur assure que deux requêtes successives adressées un même compteur électrique soient séparées par un écart temporel supérieur ou égal à un seuil prédéfini.

13. Procédé selon l'une quelconque des revendications 1 à 12, **caractérisé en ce que** le réseau à courants porteurs en ligne est conforme aux spécifications PRIME ou aux spécifications G3-PLC.

14. Moyens de stockage, **caractérisés en ce qu'**ils stockent un programme d'ordinateur comprenant des instructions pour mettre en oeuvre, par un dispositif concentrateur, le procédé selon l'une quelconque des revendications 1 à 13, lorsque ledit programme est exécuté par un processeur dudit dispositif concentrateur.

15. Dispositif concentrateur (110) adapté pour ordonnancer des exécutions de tâches par des compteurs électriques (132 ; 134 ; 135) d'un système d'alimentation électrique, les compteurs électriques étant destinés à être rattachés au dispositif concentrateur via un réseau à courants porteurs en ligne (121), le dispositif concentrateur étant adapté pour recevoir des requêtes d'intervention en provenance d'un système d'information (100) d'un opérateur du système d'alimentation électrique, chaque requête d'intervention décrivant au moins une tâche à réaliser par au moins un compteur électrique dans un intervalle de temps précisé par ladite requête d'intervention,
**caractérisé en ce que** le dispositif concentrateur est adapté pour tenter (503 ; 603 ; 607 ; 609 ; 612) de faire exécuter en priorité par des compteurs électriques des tâches qui n'ont pas encore été tentées d'être exécutées par lesdits compteurs électriques, lorsque l'intervalle temporel relatif à chacune desdites tâches a débuté mais n'est pas encore écoulé ;
le dispositif concentrateur est adapté pour placer (505) en file d'attente de récupération des exécutions de tâches respectives qui ont été requises par le dispositif concentrateur auprès de compteurs électriques respectifs, mais pour lesquelles le dispositif concentrateur n'a pas reçu de résultat d'exécution de la part desdits compteurs électriques ;
et le dispositif concentrateur est adapté pour tenter (507 ; 610 ; 616) de faire exécuter par des compteurs électriques des tâches placées en file d'attente de récupération, lorsque l'intervalle temporel relatif à chacune desdites tâches a débuté mais n'est pas encore écoulé et qu'il ne reste aucune tâche qui n'ait pas encore été tentée d'être exécutée alors que l'intervalle temporel relatif à ladite tâche a débuté mais n'est pas encore écoulé.

## Patentansprüche

1. Verfahren zur Ablaufsteuerung von Aufgabenausführungen durch Stromzähler (132, 134, 135) eines Stromversorgungssystems, wobei die Stromzähler über ein Powerline-Netzwerk (121) an eine Konzentratoreinrichtung (110) angebunden sind, wobei die Konzentratoreinrichtung Handlungsaufforderungen seitens eines Informationssystems eines Betreibers des Stromversorgungssystems (100) erhält, wobei jede Handlungsaufforderung wenigstens eine Aufgabe beschreibt, die von wenigstens einem Stromzähler binnen eines, in der genannten Handlungsaufforderung präzisierten Zeitintervalls auszuführen ist,
**dadurch gekennzeichnet, dass** die Konzentratoreinrichtung versucht (503, 603, 607, 609, 612), durch die Stromzähler vorrangig Aufgaben ausführen zu lassen, deren Ausführung durch die genannten Stromzähler noch nicht versucht wurde während das, jede der genannten Aufgaben betreffende Zeitintervall begonnen hat, aber noch nicht abgelaufen ist,
dadurch, dass die Konzentratoreinrichtung die jeweiligen Aufgabenausführungen, zu denen sie die jeweiligen Stromzähler aufgefordert hat, von denen sie aber kein Ausführungsergebnis erhalten hat, in eine Wiedergewinnungs-Warteschlange platziert (505),
und dadurch, dass die Konzentratoreinrichtung versucht (507, 610, 616), durch die Stromzähler in der Wiedergewinnungs-Warteschlange platzierte Aufgaben ausführen zu lassen während das, jede der genannten Aufgaben betreffende Zeitintervall begonnen hat, aber noch nicht abgelaufen ist und keine Aufgabe verbleibt, deren Ausführung noch nicht versucht wurde, während das, die genannte Aufgabe betreffende Zeitintervall begonnen hat, aber noch nicht abgelaufen ist.

2. Verfahren nach Patentanspruch 1, **dadurch gekennzeichnet, dass** wenigstens eine Aufgabe, die durch wenigstens einen Stromzähler auszuführen ist, in Unteraufgaben gegliedert ist, und dadurch, dass die Konzentratoreinrichtung sicherstellt, dass die Ausführung der genannten Unteraufgaben nach einer Reihenfolge abläuft, die explizit oder implizit in der Handlungsaufforderung, in der die gennanten Unteraufgaben beschrieben sind, angegeben ist.

3. Verfahren nach einem der Patentansprüche 1 und 2, **dadurch gekennzeichnet, dass** jede Aufgabe, die von einem Stromzähler auszuführen ist, aus :
- einer Aktualisierung wenigstens eines Parameters des genannten Stromzählers oder aus
- einer, vom genannten Stromzähler durchgeführten Erhebung von Messdaten über einen gegebenen Zeitraum, oder aus
- einer, vom genannten Stromzähler auszuführenden internen Aktion besteht.

4. Verfahren nach einem der Patentansprüche 1 bis 3, **dadurch gekennzeichnet, dass** die Konzentratoreinrichtung bei mehreren, in der Wiedergewinnungs-Warteschlange platzierten jeweiligen Aufgabenausführungen eine Sortierung der genannten Ausführungen in der Wiedergewinnungs-Warteschlange nach wenigstens einem vordefinierten Kriterium durchführt.

5. Verfahren nach Patentanspruch 4, **dadurch gekennzeichnet, dass** die Konzentratoreinrichtung von jedem Stromzähler, der an sie angebundenen ist, einen Nachweis vom letzten Zeitpunkt einer fehlerfreien Kommunikation zwischen ihr und dem genannten Stromzähler aufbewahrt und dadurch, dass die Konzentratoreinrichtung die genannte Sortierung unter Berücksichtigung des letzten Zeitpunkts einer fehlerfreien Kommunikation zwischen ihr und jedem Stromzähler, der von einer, in der Warteschlange platzierten Aufgabenausführung betroffen ist, durchführt.

6. Verfahren nach Patentanspruch 4 und 5, **dadurch gekennzeichnet, dass** die Konzentratoreinrichtung eine Information bezüglich der Hierarchie-Ebene jedes, an die Konzentratoreinrichtung angebundenen Stromzählers in einem vom Powerline-Netzwerk gebildeten Baum, dessen Wurzel die Konzentratoreinrichtung ist, erhält und dadurch, dass die Konzentratoreinrichtung die Sortierung unter Berücksichtigung der Information bezüglich der Hierarchie-Ebene jedes Stromzählers, der von einer, in einer Warteschlange platzierten Aufgabenausführung betroffen ist, durchführt.

7. Verfahren nach Patentanspruch 6, **dadurch gekennzeichnet, dass** die Konzentratoreinrichtung zudem eine Entfernung zwischen den, nacheinander zur Ausführung jeweiliger Aufgaben aufgeforderten Stromzählern in dem, vom Powerline-Netzwerk gebildeten Baum berücksichtigt.

8. Verfahren nach einem der Patentansprüche 4 bis 7, **dadurch gekennzeichnet, dass** die Konzentratoreinrichtung eine Information erhält, die für einen letzten Aufzeichnungszeitpunkt im Powerline-Netzwerk jedes, an die Konzentratoreinrichtung angebundenen Stromzählers räpresentativ ist und dadurch, dass die Konzentratoreinrichtung die Sortierung unter Berücksichtigung der genannten letzten Aufzeichnung jedes Stromzählers, der von einer, in der Warteschlange platzierten Aufgabenausführung betroffen ist, durchführt.

9. Verfahren nach einem der Patentansprüche 4 bis 8, **dadurch gekennzeichnet, dass** die Konzentratorvorrichtung im Speicher einen Nachweis ablegt, der für jede Aufgabe, zu deren Ausführung wenigstens ein Stromzähler aufgefordert wurde, angibt, ob die genannte Aufgabe von jedem betroffenen Stromzähler korrekt ausgeführt wurde und dadurch, dass die Konzentratoreinrichtung die Sortierung unter Berücksichtigung der gespeicherten Nachweise wenigstens einer vorangegangenen Handlungsaufforderung, die dieselbe Aufgabe und den-/dieselben Stromzähler betrifft, durchführt.

10. Verfahren nach einem der Patenansprüche 4 bis 9, **dadurch gekennzeichnet, dass** die Konzentratoreinrichtung zur Durchführung der Sortierung eine Kriterienhierarchie anwendet.

11. Verfahren nach Patentanspruch 10, **dadurch gekennzeichnet, dass** die Konzentratoreinrichtung die Kriterienhierarchie entsprechend der Stabilitätsstatistiken des Powerline-Netzwerks und/oder entsprechend einer vordefinierten Zeitplanung unter einer Vielzahl vordefinierter Kriterienhierarchien auswählt.

12. Verfahren nach einem der Patentansprüche 1 bis 11, **dadurch gekennzeichnet, dass** die Konzentratoreinrichtung sicherstellt, dass zwei aufeinanderfolgende, an den selben Stromzähler gerichtete Aufforderungen durch einen zeitlichen Abstand getrennt sind, der gleich oder höher ist als eine vordefinierte Schwelle.

13. Verfahren nach einem der Patentansprüche 1 bis 12, **dadurch gekennzeichnet, dass** das Powerline-Netzwerk den PRIME- oder G3-PLC-Spezifikationen entspricht.

14. Speichermittel, **dadurch gekennzeichnet, dass** sie ein Computerprogramm speichern, das Anweisungen zur Umsetzung des Verfahrens nach einem der Patentansprüche 1 bis 13 durch eine Konzentratoreinrichtung umfasst, wenn das genannte Programm von einem Prozesor der genannten Konzentratoreinrichtung ausgeführt wird.

15. Für die Ablaufsteuerung von Aufgabenausführungen durch Stromzähler (132, 134, 135) eines Stromversorgungsssytems geeignete Konzentratoreinrichtung (110), wobei die Stromzähler dazu bestimmt sind, über ein Powerline-Netzwerk (121) an die Konzentratoreinrichtung angebunden zu werden, wobei die Konzentratoreinrichtung geeignet ist, von einem Informationssystem (100) eines Stromversorgungssystembetreibers Handlungsaufforderungen zu erhalten, wobei jede Handlungsaufforderung wenigstens eine von wenigstens einem Stromzähler binnen eines, in der genannten Handlungsaufforderung präzisierten Zeitintervalls auszuführende Aufgabe beschreibt,
**dadurch gekennzeichnet, dass** die Konzentratoreinrichtung geeignet ist, zu versuchen (503, 603, 607, 609, 612), durch die Stromzähler vorrangig Aufgaben ausführen zu lassen, deren Ausführung durch die genannten Stromzähler noch nicht versucht wurde, während das, jede der genannten Aufgaben betreffende Zeitintervall begonnen hat, aber noch nicht abgelaufen ist,
dadurch, dass die Konzentratoreinrichtung geeignet ist, jeweilige Aufgabenausführungen, zu denen die Stromzähler von der Konzentratoreinrichtung aufgefordert wurden, von denen sie aber kein Ausführungsergebnis erhalten hat, in eine Wiedergewinnungs-Warteschlange zu platzieren (505),
und dadurch, dass die Konzentratoreinrichtung geeignet ist, zu versuchen (507, 610, 616), durch die Stromzähler in der Wiedergewinnungs-Warteschlange platzierte Aufgaben ausführen zu lassen, während das, jede der genannten Aufgaben betreffende Zeitintervall begonnen hat, aber noch nicht abgelaufen ist und keine Aufgabe verbleibt, deren Ausführung noch nicht versucht wurde, während das, die genannte Aufgabe betreffende Zeitintervall begonnen hat, aber noch nicht abgelaufen ist.

## Claims

1. Method for scheduling the execution of tasks by electricity meters (132; 134; 135) of an electrical power system, the electricity meters being attached to a concentrator device (110) via a power line network (121), the concentrator device receiving intervention requests from an information system (100) of an operator of the electrical power system, each intervention request describing at least one task to be performed by at least one electricity meter within a time interval specified by said intervention request, **characterized in that** the concentrator device attempts (503; 603; 607; 609; 612) to have executed as a priority by electricity meters tasks which have not yet been attempted to be executed by said electricity meters, when the time interval relating to each of said tasks has begun but has not yet elapsed;
the concentrator device places (505) in a recovery queue respective task executions which have been requested of respective electricity meters by the concentrator device, but for which the concentrator device has not received the execution result from said electricity meters;
and the concentrator device attempts (507; 610; 616) to have tasks placed in the recovery queue executed by electricity meters when the time interval relative to each of said tasks has begun but has not yet elapsed and no task remains whose execution has not yet been attempted while the time interval relative to said task has begun but has not yet elapsed.

2. Method according to Claim 1, **characterized in that** at least one task to be executed by at least one electricity meter is broken down into sub-tasks, and the concentrator device ensures that the execution of said sub-tasks is scheduled according to a running order, explicitly or implicitly, indicated in the intervention request in which said sub-tasks are described.

3. Method according to either one of Claims 1 and 2, **characterized in that** each task to have executed by an electricity meter is:
- an updating of at least one parameter of said electricity meter; or
- a collection of data from measurements performed by said electricity meter over a given time band; or
- an internal action to be performed by said electricity meter.

4. Method according to any one of Claims 1 to 3, **characterized in that**, when a number of respective task executions have been placed in the recovery queue, the concentrator device performs a sort of said executions in the recovery queue according to at least one predefined criterion.

5. Method according to Claim 4, **characterized in that** the concentrator device keeps a trace, for each of the electricity meters which are attached to it, of the last instant at which the concentrator device has had an error-free communication with said electricity meter, and the concentrator device performs said sort by taking account of the last instant at which the concentrator device has had an error-free communication with each electricity meter affected by a queued task execution.

6. Method according to either one of Claims 4 and 5, **characterized in that** the concentrator device obtains information on hierarchical level in a tree formed by the power line network and of which the concentrator device is the root, from each electricity meter attached to the concentrator device, and the concentrator device performs said sort by taking account of the hierarchical level information of each electricity meter affected by a queued task execution.

7. Method according to Claim 6, **characterized in that** the concentrator device further takes account of a distance, in the tree formed by the power line network, between electricity meters on which respective tasks are successively requested to be executed.

8. Method according to any one of Claims 4 to 7, **characterized in that** the concentrator device obtains information representative of an instant of last recording, in the power line network, of each electricity meter attached to the concentrator device, and the concentrator device performs said sort by taking account of said instant of last recording of each electricity meter affected by a queued task execution.

9. Method according to any one of Claims 4 to 8, **characterized in that** the concentrator device stores in memory a trace indicating, for each task whose execution has been requested of at least one electricity meter, whether said task has been correctly executed by each electricity meter concerned, and the concentrator device performs said sort by taking account of the traces stored for at least one preceding intervention request concerning the same task and the same electricity meter(s).

10. Method according to any one of Claims 4 to 9, **characterized in that**, to perform said sort, the concentrator device applies a hierarchy of criteria.

11. Method according to Claim 10, **characterized in that** the concentrator device selects the hierarchy of criteria from a plurality of predefined hierarchies of criteria, as a function of power line network stability statistics and/or as a function of a predefined calendar.

12. Method according to any one of Claims 1 to 11, **characterized in that** the concentrator device ensures that two successive requests addressed to a same electricity meter are separated by a time difference greater than or equal to a predefined threshold.

13. Method according to any one of Claims 1 to 12, **characterized in that** the power line network conforms to the PRIME specifications or to the G3-PLC specifications.

14. Storage means, **characterized in that** they store a computer program comprising instructions for the implementation, by a concentrator device, of the method according to any one of Claims 1 to 13, when said program is run by a processor of said concentrator device.

15. Concentrator device (110) suitable for scheduling the executions of tasks by electricity meters (132; 134; 135) of an electrical power system, the electricity meters being intended to be attached to the concentrator device via a power line network (121), the concentrator device being suitable for receiving intervention requests from an information system (100) of an operator of the electrical power system, each intervention request describing at least one task to be performed by at least one electricity meter in a time interval specified by said intervention request, **characterized in that** the concentrator device is suitable for attempting (503; 603; 607; 609; 612) to have executed as priority by electricity meters tasks whose execution has not yet been attempted by said electricity meters, when the time interval relative to each of said tasks has begun but has not yet elapsed;
the concentrator device is suitable for placing (505), in a recovery queue, executions of respective tasks which have been requested by the concentrator device of the respective electricity meters, but for which the concentrator device has not received an execution result from said electricity meters;
and the concentrator device is suitable for attempting (507; 610; 616) to have executed by electricity meters tasks placed in the recovery queue, when the time interval relative to each of said tasks has begun but has not yet elapsed and there is no task remaining whose execution has not yet been attempted while the time interval relative to said task has begun but has not yet elapsed.
